# EUROPÄISCHE PATENTSCHRIFT

(11) **EP 1 406 232 B1**
(45) Veröffentlichungstag und Bekanntmachung des Hinweises auf die Patenterteilung: **04.10.2006**
(21) Anmeldenummer: 03017018.7
(22) Anmeldetag: 26.07.2003
(51) Int. Cl.: G09F 9/302, E05B 41/00, B60K 35/00, B60Q 9/00, E05B 65/12

(54) **Anzeigeeinrichtung für einen Schliesszustand von Zugangseinrichtungen eines Kraftfahrzeuges**
Display unit for the state of closure of the doors and the luggage boot lids of a vehicle
Dispositif d'affichage de l'état de fermeture du coffre et des portes d'un véhicule automobile

(30) Priorität: 01.08.2002 DE 10235133
(43) Veröffentlichungstag der Anmeldung: 07.04.2004
(73) Patentinhaber: ADAM OPEL AG, 65423 Rüsselsheim (DE)
(72) Erfinder: Bald, Heiko, 64397 Modautal (DE)

(56) Entgegenhaltungen:
- EP-A- 0 420 708
- DE-A- 10 115 849
- DE-A1- 2 505 733
- DE-A1- 3 119 215
- DE-A1- 4 315 645
- DE-A1- 19 943 569
- GB-A- 2 350 224
- US-A- 5 949 330

## Beschreibung

Die Erfindung bezieht sich auf eine Anzeigeeinrichtung für einen Schließzustand von Zugangseinrichtungen, insbesondere Türen, Kofferraumdeckel und/oder Motorhaube, eines Kraftfahrzeuges.

Aus der Praxis ist eine Anzeigeinrichtung für den Schließzustand einer Zugangseinrichtung eines Kraftfahrzeuges bekannt, die ein in einem Instrument angeordnetes Symbol umfasst, das beispielsweise bei einer geöffneten bzw. nicht komplett geschlossenen Tür hinterleuchtet ist. Das Symbol zeigt eine schematische Darstellung eines Kraftfahrzeuges mit geöffneter Tür.

Eine bekannte Anzeigeeinrichtung (DE 25 05 733 A1) weist eine 7-Segment-Anzeige auf, mit deren Hilfe der Zustand der Bremsanlage des Kraftfahrzeuges angezeigt wird. Insbesondere werden die Zustände von Bremsbelagverschleißgebern angezeigt. In der 7-Segment-Anzeige findet eine sinnfällige Anzeige mit Zuordnung der einzelnen seitlichen Segmente zu den jeweiligen Radpositionen und der mittleren Elemente zu Betriebszuständen der Bremsanlage statt. Der Zustand von Zugangseinrichtungen wird hingegen nicht angezeigt.

Eine weitere bekannte Anzeigeeinrichtung (DE 43 15 645 A1) zeigt die Zustände von Schließeinrichtungen an. Dabei übertragen Lichtleiter die Lichtverhältnisse am Überwachungsort zu der Anzeigeeinrichtung, wo eine symbolische, analoge Darstellung mit örtlicher Zuordnung zu dem Überwachungsort stattfindet. Eine elektronische, digitale Anzeige findet nicht statt.

Aus der britischen Offenlegungsschrift GB 2 350 224 A ist allgemein eine 11 bis 13-Segment-Anzeige bekannt, die weniger komplex als konventionelle alphanumerische Segment-Anzeigen aufgebaut ist. Mit dieser Anzeige können die Großbuchstaben des Englischen Alphabets und die Arabischen Ziffern 0 bis 9 dargestellt werden. Die Anzeige eignet sich jedoch nicht, um ein Kraftfahrzeug mit seinen Türen und sonstigen Verschlüssen sinnfällig und symbolisch darzustellen.

Eine andere bekannte Anzeigeeinrichtung (DE 199 43 569 A1) ist ein Kombinationsinstrument für Kraftfahrzeuge. Um die Wahrnehmbarkeit für den Fahrer zu verbessern, findet eine farbvariable Anzeige statt; so kann zur besseren Wahrnehmung beispielsweise blinken. Die Anzeige ist dabei auf die Betriebszustände während der Fahrt beschränkt. Eine Anzeige des Schließzustandes findet nicht statt.

Darüber hinaus ist noch eine weitere Anzeigeeinrichtung (DE 31 19 215 A1) bekannt, die zur elektronischen Darstellung der Geschwindigkeit dient. Diese Einrichtung umfasst dabei eine großflächige Anzeige mittels LCD-Display, die der herkömmlichen, rein mechanischen Anzeige nachempfunden ist. In dem Anzeigefeld sind mehrere digitale Anzeigen untergebracht, die beispielsweise den Kilometerstand anzeigen. Eine Mehrfach- oder Multifunktionsanzeige ist dabei nicht gegeben. Es findet auch keine Anzeige des Schließzustandes statt.

Es ist Aufgabe der Erfindung, eine Anzeigeeinrichtung der eingangs genannten Art zu schaffen, die kostengünstig zu realisieren ist.

Erfindungsgemäß wird die Aufgabe dadurch gelöst, dass mindestens eine 7-Segment-Anzeige einen geöffneten Zustand mindestens einer der Zugangseinrichtungen darstellt.

7-Segment-Anzeigen zur Darstellung alphanumerischer Zeichen befinden sich ohnehin in einem Instrument jedes Kraftfahrzeugs und dienen beispielsweise zur Darstellung einer Uhrzeit oder eines so genannten Tageskilometerzählers. Beim zumindest teilweise geöffneten Zustand einer Zugangseinrichtung erfolgt eine für den Fahrer des Kraftfahrzeuges optisch wahrnehmbare Signalisierung durch mindestens eine der 7-Segment-Anzeigen, indem diese beispielsweise gegenüber dem Normalzustand heller aufleuchtet, in einem bestimmten Rhythmus eine vorgegebne Zeichenfolge anzeigt oder überhaupt nicht aufleuchtet. Die Signalisierung ist vielfältig zu bewerkstelligen und kostengünstig zu realisieren, da auf eine vorhandene 7-Segment-Anzeige zurückgegriffen wird, die zur Ausführung einer zusätzlichen Funktion beispielsweise entsprechend rechnergesteuert beaufschlagt wird. Die Darstellung bezüglich des geöffneten Zustandes einer der Zugangseinrichtungen kann beispielsweise derart vorgenommen werden, dass sie lediglich bei mindestens einer geöffneten Zugangseinrichtung und/oder während einer vorgegebenen Zeitspanne erfolgt. Danach kann die Anzeigeneinrichtung zur Darstellung anderer Informationen genutzt werden.

Zusätzlich zeigen einzelne Segmente weiterer, mehrerer unmittelbar nebeneinander angeordneter 7-Segment-Anzeigen ein sinnfälliges Wort bezüglich des geöffneten Zustandes der Zugangseinrichtungen an. Die einzelnen Segmente werden beispielsweise derart spannungsbeaufschlagt, dass für den Fahrer "OPEn" oder "OFFEn" von den 7-Segment-Anzeigen abzulesen ist und er daraufhin auf den geöffneten Zustand einer Zugangseinrichtung schließen kann.

Damit der Fahrer eine eindeutige Information bezüglich der Position der geöffneten Zugangseinrichtung erhält, repräsentieren vorzugsweise die seitlichen Segmente und/oder das untere Segment und/oder das obere Segment einer der 7-Segment-Anzeigen jeweils eine Zugangseinrichtung. Zweckmäßigerweise erfolgt die Zuordnung der einzelnen Segmente zu der jeweiligen Zugangseinrichtung sinnfällig. Die seitlichen Segmente bilden Anzeigen für die Türen, die getrennt nach vorderen und hinteren sowie die rechte und linke Seite angesteuert werden. Das untere Segment steht für einen Kofferraumdeckel und das obere Segment für die Motorhaube.

Um den Fahrer eine geöffnete Zugangseinrichtung vor dem Starten des Kraftfahrzeuges anzuzeigen, findet vorteilhafterweise eine Spannungsversorgung der Segmente zum Hinweis auf den geöffneten Zustand mindestens einer der Zugangseinrichtungen unmittelbar nach dem beaufschlagen einer Zündung des Kraftfahrzeuges statt. Selbstverständlich kann diese optische Signalisierung mit weiteren Warneinrichtungen, z.B. mit akustischen Signalgeräten, gekoppelt sein. Zweckmäßigerweise erfolgt die Spannungsversorgung derart gepulst, dass die Segmente aufblinken.

Bevorzugt dienen die 7-Segment-Anzeigen zur Darstellung einer fälligen Kraftfahrzeuginspektion. Nach einer entsprechenden Ansteuerung durch einen Bordcomputer des Kraftfahrzeuges wird beispielsweise eine alphanumerische Zeichenkette dargestellt, die den Fahrer des Kraftfahrzeuges auf die fällige Kraftfahrzeuginspektion hinweist. Diese Darstellung erfolgt vorzugsweise nachdem sämtliche Zugangseinrichtungen geschlossen wurden und die 7-Segment-Anzeigen nach einem bestimmten Zeitintervall nicht mehr zur diesbezüglichen Darstellung benötigt werden.

Zur Vermeidung zusätzlicher Anzeigeeinrichtungen im Inneren des Kraftfahrzeuges dienen vorzugsweise die 7-Segment-Anzeigen zur Anzeige eines Kilometerstandes. Nachdem der Zustand der Zugangseinrichtungen sowie gegebenenfalls eine fällige Kraftfahrzeuginspektion dargestellt wurden, stehen die 7-Segment-Anzeigen als Kilometerzähler oder Tageskilometerzähler zur Verfügung.

Erfindungsgemäß wird die Aufgabe auch durch die Verwendung eines aus mehreren 7-Segment-Anzeigen zusammengesetzten Kilometerzählers als Anzeigeeinrichtung gelöst.

Durch die Verwendung des Kilometerzählers als Anzeigeeinrichtung für den Schließzustand von Zugangseinrichtungen werden Kosten bezüglich der Anordnung weiterer separater Anzeigeeinrichtungen, die lediglich diesem Zweck dienen, eingespart.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand mehrerer Ausführungsbeispiele unter Bezugnahme auf die zugehörigen Zeichnungen näher erläutert. Es zeigen:
- Fig. 1: eine schematische Darstellung einer erfindungsgemäßen Anzeigeeinrichtung,
- Fig. 2: eine weitere schematische Darstellung der Anzeigeinrichtung gemäß Fig. 1,
- Fig. 3: eine schematische Darstellung der Anzeigeinrichtung gemäß Fig. 1 in einer alternativen Verwendung und
- Fig. 4: eine schematische Darstellung der Anzeigeeinrichtung gemäß Fig. 1 in einer weiteren alternativen Verwendung.

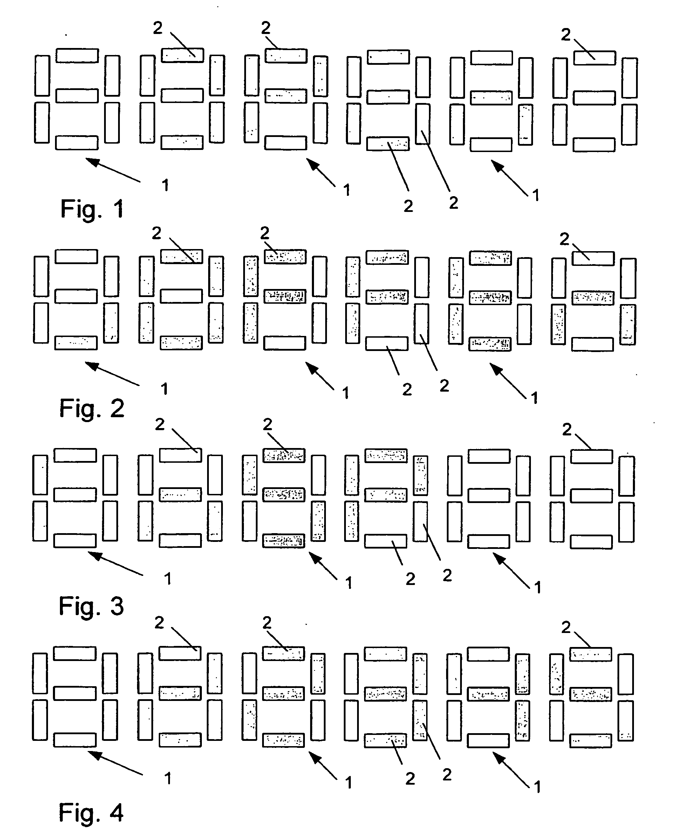

Die Anzeigeeinrichtung umfasst mehrere nebeneinander angeordnete 7-Segment-Anzeigen 1, die jeweils im Wesentlichen aus mehreren separat mit Spannung zu beaufschlagenden Segmenten 2 bestehen. Die Anzeigeeinrichtung ist Bestandteil eines Instrumentes eines Kraftfahrzeuges, das im Weiteren eine Geschwindigkeitsanzeige, eine Tankfüllstandsanzeige und dergleichen aufweist, wobei die Anzeigeeinrichtung in erster Linie zur Darstellung eines Kilometerstandes des Kraftfahrzeuges dient, wozu einzelne Segmente 2 gemäß Fig. 4 zur Anzeige einer dem Kilometerstand entsprechenden Zahlenfolge mit Spannung versorgt werden. Im Weiteren ist nach Fig. 3 die Darstellung einer fälligen Kraftfahrzeuginspektion durch das Erzeugen der sinnfälligen Buchstabenkombination "InSP" möglich.

Zur Darstellung des Schließzustandes, dem zumindest teilweise geöffneten oder geschlossenen Zustand von Zugangseinrichtungen des Kraftfahrzeuges werden die einzelnen Segmente 2 einer der 7-Segment-Anzeigen 1 sinnfällig mit Spannung versorgt. Die vertikalen Segmente 2 sind den Türen zugeordnet, wobei eine Unterscheidung nach den vorderen und hinteren sowie den rechten und linken Türen stattfindet. Das obere horizontale Segment 2 ist einer Motorhaube und das untere horizontale Segment 2 einer Kofferraumklappe zugeordnet. Zusätzlich erfolgt ein Hinweis mittels eines Schriftzuges der durch eine entsprechende Spannungsbeaufschlagung der einzelnen Segmente als "OPEn" oder "OFFEn" dargestellt wird. Demnach signalisiert die Darstellung nach Fig. 1, dass die vordere Tür auf der linken Seite des Kraftfahrzeuges nicht ordnungsgemäß geschlossen ist und die Darstellung nach Fig. 2, dass sich die hintere rechte Tür sowie die Kofferraumklappe im mindestens teilweise geöffneten Zustand befinden. Diese Darstellung erfolgt nach dem Einschalten einer Zündung.

Nachdem die Zugangseinrichtungen geschlossen sind oder der Motor des Kraftfahrzeuges gestartet wird, erfolgt gegebenenfalls der Hinweis auf die fällige Kraftfahrzeuginspektion. Anschließend wird der Kilometerstand des Kraftfahrzeuges zur Anzeige gebracht.

## Patentansprüche

1. Anzeigeeinrichtung für einen Schließzustand von Zugangseinrichtungen, insbesondere Türen, Kofferraumdeckel und/oder Motorhaube, eines Kraftfahrzeuges, **dadurch gekennzeichnet, dass** mindestens eine erste 7-Segment-Anzeige (1) einen geöffneten Zustand mindestens einer der Zugangseinrichtungen darstellt und dass einzelne Segmente (2) weiterer mehrerer unmittelbar nebeneinander angeordneter 7-Segment-Anzeigen (1) ein sinnfälliges Wort bezüglich des geöffneten Zustandes der Zugangseinrichtungen anzeigen.

2. Anzeigeeinrichtung nach Anspruch 1, **dadurch gekennzeichnet, dass** die seitlichen Segmente (2) und/oder das untere Segment (2) und/oder das obere Segment (2) der ersten 7-Segment-Anzeige (1) jeweils eine Zugangseinrichtung repräsentieren.

3. Anzeigeeinrichtung nach Anspruch 2, **dadurch gekennzeichnet, dass** die Zuordnung der einzelnen Segmente (2) zu der jeweiligen Zugangseinrichtung sinnfällig erfolgt.

4. Anzeigeeinrichtung nach einem der Ansprüche 1 bis 3 **dadurch gekennzeichnet, dass** die Spannungsversorgung derart gepulst erfolgt, dass die Segmente (2) aufblinken.

5. Anzeigeeinrichtung nach einem der Ansprüche 1 bis 4 **dadurch gekennzeichnet, dass** die 7-Segment-Anzeigen (1) zur Darstellung einer fälligen Kraftfahrzeuginspektion dienen.

6. Anzeigeeinrichtung nach einem der Ansprüche 1 bis 5 **dadurch gekennzeichnet, dass** die 7-Segment-Anzeigen (1) zur Anzeige eines Kilometerstandes dienen.

7. Verwendung einer aus mehreren 7-Segment-Anzeigen (1) zusammengesetzten Anzeigeeinrichtung nach einem der Ansprüche 1 bis 6 zur Anzeige des Schließzustandes von Zugangseinrichtungen unmittelbar nach dem Beaufschlagen einer Zündung des Kraftfahrzeuges und gegebenenfalls einer anschließenden Anzeige einer fälligen Kraftfahrzeuginspektion sowie einer anschließenden Anzeige des Kilometerstands des Kraftfahrzeuges.

## Claims

1. Display unit for a state of closure of access installations, in particular doors, boot lid and/or bonnet, of a motor vehicle, **characterised in that** at least a first 7-segment display (1) represents an opened state at least of one of the access installations, and that individual segments (2) of a plurality of further 7-segment displays (1) arranged directly adjacent to one another display a meaningful word with respect to the opened state of the access installations.

2. Display unit according to Claim 1, **characterised in that** the side segments (2) and/or the lower segment (2) and/or the upper segment (2) of the first 7-segment display (1) respectively represent an access installation.

3. Display unit according to Claim 2, **characterised in that** the association of the individual segments (2) with the respective access installation occurs in a meaningful manner.

4. Display unit according to one of Claims 1 to 3, **characterised in that** the power supply is pulsed such that the segments (2) flash.

5. Display unit according to one of Claims 1 to 4, **characterised in that** the 7-segment displays (1) serve to display a due motor vehicle service.

6. Display unit according to one of Claims 1 to 5, **characterised in that** the 7-segment displays (1) serve to display a mileage status.

7. Use of a display unit composed of a plurality of 7-segment displays (1) according to one of Claims 1 to 6 to display the state of closure of access installations directly after starting an ignition of the motor vehicle and possibly a subsequent display of a due motor vehicle service and also a subsequent display of the mileage status of the motor vehicle.

## Revendications

1. Dispositif d'affichage pour un état de fermeture de dispositifs d'accès, en particulier de portes, couvercle de coffre et/ou capot de moteur d'un véhicule automobile, **caractérisé en ce qu'**au moins un premier afficheur à 7 segments (1) représente un état ouvert d'au moins l'un des dispositifs d'accès et que divers segments (2) de plusieurs autres afficheurs à 7 segments (1) montés directement côte à côte visualisent un mot présentant un certain sens concernant l'état ouvert des dispositifs d'accès.

2. Dispositif d'affichage selon la revendication 1, **caractérisé en ce que** les segments (2) latéraux et/ou le segment (2) inférieur et/ou le segment (2) supérieur du premier afficheur à 7 segments (1) représentent respectivement un dispositif d'accès.

3. Dispositif d'affichage selon la revendication 2, **caractérisé en ce que** l'affectation des divers segments (2) aux dispositifs d'accès respectifs s'effectue de manière logique.

4. Dispositif d'affichage selon l'une quelconque des revendications 1 à 3, **caractérisé en ce que** l'alimentation en tension s'effectue de manière pulsée de sorte que les segment (2) se mettent à clignoter.

5. Dispositif d'affichage selon l'une quelconque des revendications 1 à 4, **caractérisé en ce que** les afficheurs à 7 segments (1) servent à représenter un contrôle de véhicule automobile arrivé à échéance.

6. Dispositif d'affichage selon l'une quelconque des revendications 1 à 5, **caractérisé en ce que** les afficheurs à 7 segments (1) servent à visualiser le kilométrage.

7. Utilisation d'un dispositif d'affichage constitué de plusieurs afficheurs à 7 segments (1) selon l'une quelconque des revendications 1 à 6, pour la visualisation de l'état de fermeture de dispositifs d'accès, immédiatement après l'alimentation d'un allumage du véhicule automobile, et puis de l'affichage éventuel d'un contrôle du véhicule automobile arrivé à échéance, suivi d'un affichage du kilométrage du véhicule automobile.
